# EUROPEAN PATENT SPECIFICATION

(11) **EP 1 203 453 B1**
(45) Date of publication and mention of the grant of the patent: **28.10.2015**
(21) Application number: 01911492.5
(22) Date of filing: 17.01.2001
(51) Int. Cl.: H04L 29/08, H04L 12/28, H04N 5/445, H04N 7/173, H04N 21/236, H04N 21/258, H04N 21/41, H04N 21/422, H04N 21/435, H04N 21/436, H04N 21/61, H04N 21/81, H04N 5/44, H04N 7/16, G08C 19/28

(54) **SET-TOP BOX CONNECTS REMOTE CONTROL DEVICE TO WEB SITE FOR CUSTOMIZED CODE DOWNLOADS**
VERBINDUNG EINER FERNBEDIENUNG ZU EINER WEB-SITE ZUM HERUNTERLADEN VON ANGEPASSTEM CODE
COFFRET D'ABONNE RELIANT UNE TELECOMMANDE A UN SITE WEB AFIN DE PERMETTRE LE TELECHARGEMENT DE CODES PERSONNALISES

(30) Priority: 21.01.2000 US 177309 P; 06.03.2000 US 519546; 01.09.2000 US 653784
(43) Date of publication of application: 08.05.2002
(73) Proprietor: Home Control Singapore Pte. Ltd., Singapore 319762 (SG)
(72) Inventor: EKKEL, Frederik, NL-5656 AA Eindhoven (NL); CARIS, Franciscus, C., M., NL-5656 AA Eindhoven (NL); DUBIL, Thomas, J., NL-5656 AA Eindhoven (NL)
(74) Representative: Ferreccio, Rinaldo
(86) International application number: PCT/EP2001/000473
(87) International publication number: WO 2001/054292

(56) References cited:
- EP-A- 0 862 304
- WO-A-00/28436
- WO-A1-96/41472
- WO-A1-99/06910
- WO-A2-99/35753
- WO-A2-99/35787
- WO-A2-99/59072
- US-A- 5 410 326

## Description

### FIELD OF THE INVENTION

The invention relates to a business model and network architecture supporting the interests of network operators, manufacturers of IP-connected electronic equipment and end-users of the equipment.

### BACKGROUND ART

Philips Electronics provides the SmartConnect (SM) service to end-users of CE equipment, especially equipment that is Internet-connected. An implementation of the SmartConnect (SM) service uses a special button on a remote control device that enables the user to directly connect, e.g., via a set top box (STB), to a dedicated SmartConnect (SM) web site. The site provides Philips Electronics with direct contact to the individual end-user, enables warranty registration, alerts the user to additional accessory sales, and provides specific content, advice, services, etc., all supported by the individual user's profile.

Aspects of the SmartConnect (SM) service are discussed in published International Application WO0017789 (attorney docket PHA 23,500), corresponding to U.S. serial no. 09/160,490, herein incorporated by reference, and in published International Application WO0028436 (attorney docket PHA 23,527), corresponding to U.S. serial no. 09/189,535, herein incorporated by reference.

The SmartConnect (SM) service enables, e.g., customizing a technical functionality of network- (e.g., Internet-) enabled equipment of an end-user and supplying customized content information. A profile of the end-user and information about a technical feature for use with the equipment are stored at a server system. Based on the user-profile it is determined whether or not the user should be notified about the availability of this feature. If it has been decided that there is a match between the user profile as stored and the information about this feature, the end-user gets notified via the network of the option to obtain the feature for being added to his/her equipment. In case the feature relates to new software, it can be downloaded via the network for preferably automatic installation in the equipment. In case the feature comprises a hardware component, it can be shipped to the end-user upon acceptance of the offer. A helpdesk is preferably through the network to help the end-user install the feature.

SmartConnect (SM) is based on the insight that network-enabled equipment is becoming a flexible repository into which the end-user can place new and exciting features over time, dependent on the user's needs or desires, context of use, advancement of technology, etc. Not all end-users are always interested in all possible features for creating enhanced functionality of the equipment. Accordingly a user-profile is established, either when the user registers his equipment with the notification service, or dynamically as a consequence of the user's interaction with the server system, or through a combination thereof. The profile is used to select technical features that are likely of interest to the user. In this manner, the user is kept abreast of the latest trends of interest to him/her. This approach implicity supports virtual recycling as equipment need to be designed for the purpose of being upgraded. The modular approach of adding or deleting technical sofware or hardware features as needed thus assists in slowing down the trend that products become obsolete fairly quickly, but without barring the manufacturer or aftermarket sales organizations from continuing doing business.

US patent 5,410,326 discloses a universal remote control device which is programmed to operate a variety of consumer products. The device is connected over a bidirectional link to either a cable converter or a telephone interface for receiving remote control device displaying icons of functions to be selected. By selecting a particular displayed icon, a command can be decoded and sent via an infrared link to one or more appliances. Infrared codes for operating a virtually unlimited number of devices can be supplied to the device over the bidirectional communications link. Further, a provision is provided to permit a telephone connection to be set up between the user's home and a facility advertising products or services over a cable television broadcast. The touch screen display will permit the actual display of these advertisements as massages received from the cable head end system. Orders may be placed from the universal remote control device based on these displayed advertisements.

WO0034851 relates to a system that enables electronic devices, using a variety of different formats and having different control types, to be controlled automatically by remote control device. The system provides the necessary conversion information to the remote control device to enable a remote control device to control a number of different consumer electronic devices.

The remote control device may operate in one of at least two different fashions. The remote control device may have dedicated buttons that correspond to particular controlled devices. For example, the remote control device may contain a button that is labeled "TV." When the TV button is pushed, the appropriate commands are sent to the master informing the master that the user now wishes to control the TV. The next button that is pushed, for example, the channel up button, causes the appropriate command to be send to the master telling it, for example, that the user wishes to go to the next highest channel. The master in turn sends the remote control device the necessary codes to increment the channel on the TV. The remote control device then takes these codes and sends them, for example using a unidirectional infrared signal, to the TV using the protocols stored in the remote control device's memory.

Alternatively, the remote control device may contain sufficient memory that the master may send the remote control device both the protocols and the necessary codes to control the devices. The remote control device saves this information in its local memory. Then, when the user wishes to change the channel on the TV, the user pushes the TV button and this causes the remote control device to enter a mode, which controls the TV using the pre-sent protocols. Then, when the user pushes the channel up or other control button, the remote control fetches the necessary codes from local memory and sends a unidirectional infrared message using the protocol that is also stored locally on the remote control device.

The difference between the two approaches is that in the first case, the master feeds the information to the remote control device cach time the remote control device needs information. In the second case, the master feeds the information needed to do all the different controls for a given device initially, and then the device handles those protocols on its own. In one embodiment of the invention, the information may be provided from the master to the remote control device each time the system is operated so that it is not necessary to discard the information when it is desired to switch controlled devices. user's appliances. This configuration can be performed prior to the transfer of the code and UI data to the remote. The STB enables programming its remote with the downloaded codes and/or UI data, e.g., through an IR or RF transmitter/blaster or a serial cable connecting the STB to a serial port of the remote for unidirectional communication with the STB, or through any other suitable means and procedures.

As an alternative to a dedicate hard button on the remote, the user can also access the server via selection in a menu displayed on a display monitor, e.g., the display monitor of TV set or another apparatus driven by the STB, or the LCD touch screen of a universal programmable remote such as the PRONTO (TM) of Philips Electronics.

As to the server containing data regarding the remote's UI, this relates to, e.g., the specific location of each of the remote's hard buttons or softkeys, or their names, so as to be able to associate a specific code with a button. When the remote has an LCD touch screen, such as the PRONTO (TM) of Philips Electronics, the UI data can also relate to, e.g., one or more panels of softkeys, and/or to the desired distribution of the softkeys among the panels. Preferably, the softkeys are clustered in a semantically logical manner so as to enhance user-friendliness of the remote in operational use.

Preferably, the consumer is allowed to affect or manipulate the data prior to the data being programmed into the remote control device. This can be achieved, e.g., through a menu displayed via the STB, wherein the consumer is requested to specify whether or not he/she desires certain operations with respect to the data. The menu can be displayed on, e.g., the TV's monitor or a display of a touch screen based handheld. The server is capable of making suggestions regarding these operations because of this consumer's profile. For example, the menu offers the option to program a single action on the remote to cause the execution of multiple activities of specific appliances among the CE equipment. This operation are preferably performed prior to programming the code and UI data into the remote control, either at the server or at the STB if the latter has the proper software application.

In this configuration stage, the server may display via the STB a graphical representation of the remote to be programmed and highlight one or more specific ones of the remote keys to illustrate to the consumer what is happening.

The invention also relates to a method of creating a customer base. The method comprises enabling a user of CE equipment to specify to a server on a data network information about the equipment. The method further comprises enabling to program a remote via the data network according to the information, and storing the information in the customer base. The remote can be a pre-programmed one for use with a set top box, the method being used for subsidizing the STB. The remote can be the one supplied with the STB. The method can also comprise enabling to use the customer base to provide a customized service to the user. The invention also relates to a method of providing a customized service to a user of CE equipment using a user profile based on the user having specified to a server on a data network information about the equipment for enabling to program a remote via the data network.

The invention is based on the following insight. When the end-user installs the STB at home and switches it on, it works directly out of the box and with the remote that came with it. Typically, the remote supplied with the set-top box is user-programmable. In order to use this remote for all other CE equipment in the home this dedicated remote needs to be programmed. Conventionally, in order to program a remote, the user has to look into the remote's manual (in the case of a TiVo box those pages are in the on-screen Setup Menu), has to scan the list of controllable equipment for which the remote is suitable and has to find the proper brand, type, and version. Then, the user has to read, for example, the numerical codes associated with the relevant equipment and enter them into the remote. A scenario wherein the user has to collect the information and then manually enter it into the remote is believed to be a user-unfriendly way of configuring the remote. Studies indicate that most users will not go through an extensive programming exercise and, therefore, will keep on using different remotes for different pieces of equipment. Much can go wrong in this manual configuration process for the remote, and the studies show that a significant percentage of all calls made to the manufacturer's Help Desk and, in case of STB's, the calls made to the Network Operator's Help Desk, are related to this programming issue. As a result significant costs are involved for the manufacturer and the Network Operator to provide customer support. The invention, now, makes the programmable remote of the set-top box an attractive feature to both the consumer and the Network Operators. In the invention, the user presses a dedicated button, in this example the SmartConnect (SM) button, on the remote and is thereupon presented with a dedicated web-site, here the SmartConnect (SM) web-site, through the IP-connected equipment, here the STB. After a sign-in process and an introduction to SmartConnect (SM) services, the user is requested to answer questions about the equipment he/she has available in the home and that he/she wants to become controllable through the remote. This could be combined with an on-line Warranty registration process. The information about the equipment and the user is communicated to the SmartConnect (SM) server. Next, the SmartConnect (SM) server's database is scanned for the proper codes and/or relevant UI data. After the proper codes and UI data have been found, and after the user has added his/her customization as mentioned above, the user is prompted to place the remote within range of an IR or RF blaster, connected to or integrated within the STB, whereupon, via the web-site, the data for the proper codes and UI features is downloaded and programmed into the remote. Upon completion of this process, the SmartConnect (SM) remote is the most convenient one to be used. As the programming is an automated process from the consumer's point of view, the Network Operator's Call Center will not have to intervene in the programming or customizing phase of the remote.

The above scenario according to the invention provides an incentive to the user to submit accurate and detailed information to the SmartConnect (SM) server about the equipment for which the remote is to be programmed. If the user does not specify the equipment correctly, either the proper codes and/or UI data do not exist in the database or the ones downloaded do not match the intended equipment. Therefore, there is an incentive for the consumer to provide accurate information. This information, now, enables to create a truthful profile of the user, based on which the SmartConnect (SM) portal and its related services can be customized for this particular user.

The profile thus created is valuable to the service provider and network operators, as it enables to customize support based on an accurate inventory of the equipment on the consumer's home network. For example, the consumer may need support in order to correctly connect the proper video input/outputs on the STB to a TV monitor or HDD-based video recorder. As the Help Desk has available this customer's profile, a much more precise and less time-consuming walk through can be provided via the telephone. The invention represents a tool for implementing a substantial reduction in overhead at the Call Center or Help Desk.

The user profile obtained through the procedure of programming or updating the STB's remote can be made available to other parties, e.g., for targeted e-commerce, for example based on demographics, or for customized content.

The user-profile information is also relevant to the control code and UI feature database of the SmartConnect (SM) server as it reflects which codes are useful and are requested most frequently. This again can be used by manufacturers and other suppliers of remote control devices in order to bundle the codes and UI aspects in most-frequently used clusters is a pre-programmed remote.

Preferably, the STB or other IP-connected equipment is equipped with an IR or RF transmitter in the front bezel and with a range long enough to reach a user on the couch (typically 10 feet from the display screen) to minimize the user's efforts required.

The invention enables the SmartConnect (SM) server to collect valuable information about the user and his/her CE equipment, as already disclosed in published patent applications WO0017789 and WO0028436, mentioned above. This information can be provided to, e.g., the Network Operators in order for them to handle calls from end-users to the Call Center much more effectively, if still necessary, as the operator exactly knows what equipment the user has available.

In the above scenario, the programming feature is based on the SmartConnect (SM) button on the remote that comes with the set-top box. When the user has programmed the remote as described the SmartConnect (SM) button will stay active and pressing it will connect the user again with the SmartConnect (SM) portal. The remote may be provided with additional dedicated buttons for direct connection to other services, which in turn allows a business model for selling real estate on the remote in a subsidized model that reduces the initial costs for the end-user.

### BRIEF DESCRIPTION OF THE DRAWING

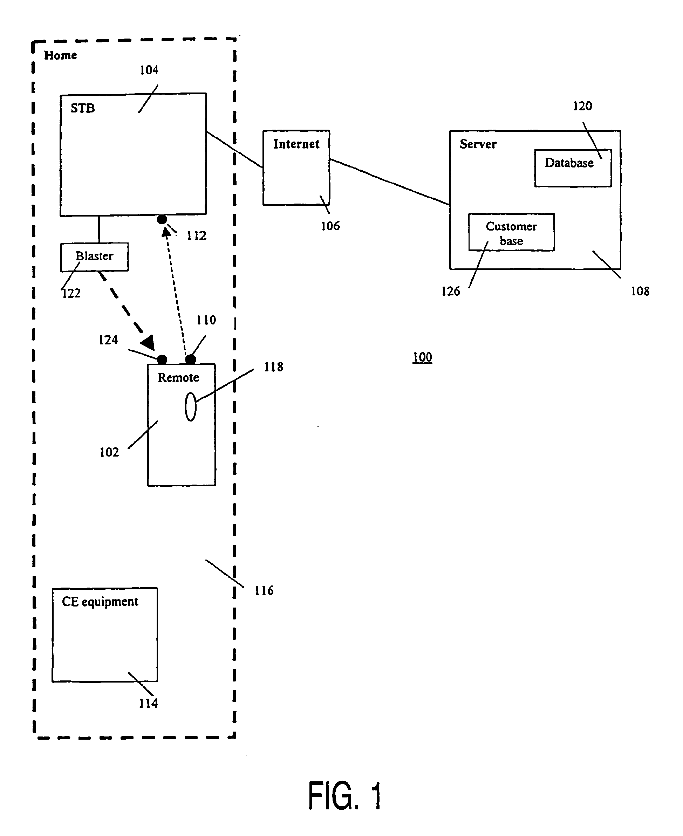

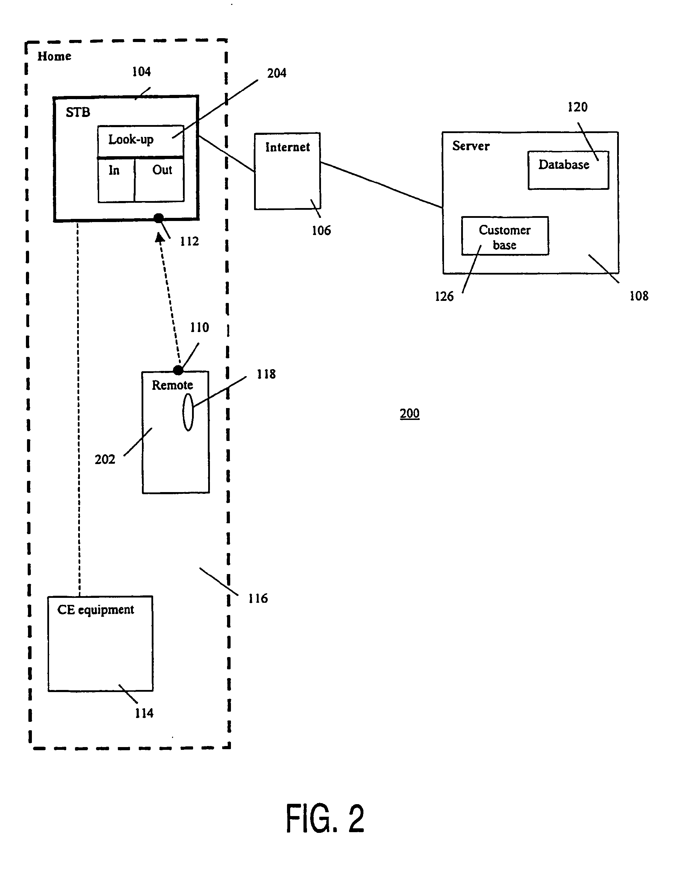

The invention is explained in further detail, by way of example and with reference to the accompanying drawing, wherein Figs.1 and 2 are block diagrams of systems in the invention.

Throughout the drawing, same reference numerals indicate similar or corresponding functionalities.

### DETAILED EMBODIMENTS

As an example, consider the following scenario. A STB is marketed together with a programmable remote. The remote has a dedicated button to connect the STB to a specific server on the Internet. The user can notify the server of his/her other CE equipment, which he/she desires to be controllable by the same remote as the one that came with the STB. The server downloads to the STB data representative of the relevant control code and/or UI aspects. The STB is provided with means to program the remote with this code and UI.

Fig.1 is a block diagram of a system 100 in the invention. System 100 comprises a remote control device 102, and an appliance 104 that is connected to the Internet 106. Device 102 comprises a traditional remote control device with hard buttons or a touch screen, LCD-based remote control device. System 100 further has a server 108. Appliance 104 in this example comprises a STB, that got purchased by the consumer in combination with remote 102 for operating STB 104 via, e.g., IR (infrared) transmitter 110 and receiver 112. Remote 102 is programmable in order to adopt control codes for other IR- or RF-controllable equipment, e.g., appliance 114, that the consumer has installed or will install in his/her home 116.

As mentioned above, the invention relates to a method of enabling a consumer to program remote control device 102, which is associated with appliance 104 that is Internet-connectable. The method comprises enabling connecting appliance 104, here an STB, to server 108 on the Internet 106 in response to the consumer controlling remote control device 102. Preferably, remote 102 has a dedicated button 118 for allowing the consumer to connect STB 104 via the Internet 106 to a specific server 108. The IR or RF code transmitted by remote 102 upon the consumer activating button 118 is interpreted by STB 104 as a request to send a message to server 108. Server 108 presents a web site on a TV display monitor (not shown) connected to STB 104 that guides the consumer to providing certain information. The consumer interacts via STB 104 with server 108 through a user-input means (not shown), e.g., a wireless keyboard, a remote control or another user-input means to supply to server 108 alphanumeric information, e.g., brand, type, serial number, about his/her further equipment, e.g., appliance 114, for which he/she desires remote 102 to be programmed with the relevant control codes and/or UI aspects. Server 108 has a database 120 that relates types, versions and brands of apparatus to their individual command control code sets and UI aspects. Server 108 runs a query based on the information supplied by the consumer. Upon a match between the information supplied and database 120, server 108 preferably prompts the consumer to confirm his/her entries as to the specifics of the further equipment and the specific regarding the UI desired. Upon a confirmation by the consumer, server 108 downloads to appliance 104 data representative of a control code and/or UI for being programmed into remote control device 102 via appliance 104. The downloaded data can be stored locally at STB 104 or is directly forwarded to remote 102.

Remote 102 is programmed, for example, via an IR or RF blaster 122 connected to STB 104. In this scenario, remote 102 is positioned close to blaster 122 and with an input 124 facing blaster 122. Remote 102 is equipped with circuitry (not shown) to receive and process an incoming stream of data from blaster 122. The data comprises the control codes and UI data requested from server 108. In addition, the data can contain the user-customizations including the single-key / multiple-activity feature mentioned earlier. The data also enables the circuitry to identify which button or input on remote 102 is to be associated with the code for operational use. For example, the data comprises identifying labels per code so as to enable the circuitry to identify each specific code, and to store it at remote 102 as assigned to the appropriate button or input. A proprietary communication protocol may be used that is tailored to the configuration of remote 102.

As variations on the theme above, appliance 104 is marketed in various versions that differ from each other in software controlled functionalities, or appliance 104 can be upgraded through software. For example, appliance 104 allows the user to connect to certain web sites with conditional access upon a subscription or only if the user has supplied to server 108 detailed information about his/her CE equipment. Access to special on-line sales services or on-line information brokers fall within such categories. Access to a personal information repository on server 108, e.g., for emails or recorded TV programs, also falls within such category. Enhancing the functionality of appliance 104, e.g., by providing access to these sites, is governed by appliance 104 in response to receiving specific IR or RF code from remote 102, possibly in combination with the unique ID number of appliance 104. This specific IR or RF code can again be programmed into remote 102 upon being downloaded from server 108 in the manner described above.

As explained above, this interaction model enables to create a customer base 126 based on accurate information obtained from the consumers. This information can be used to provide targeted or customized advertisements or services via STB 104, but also to obtain valuable demographic information. Note that remote 102 is preferably reprogrammable so as to be upgradeable when the consumer replaces pieces of his/her equipment or obtains a new apparatus.

Call Centers, not only from the Network Operator, but also from manufacturers or other suppliers from CE equipment for use on home networks, can be given access to the user profiles of this customer base 126 so as to be able to supply more accurate help in case the consumer encounters a problem with the equipment.

Fig. 2 illustrates an alternative system 200 according to the invention. System 200 comprises in this example a remote control device 202 that is a pre-programmed. That is, remote 202 uses a fixed protocol to communicate with STB 104 for control of apparatus 114 via STB 104. STB 104 uses a wired or wireless link with apparatus 114. In order to use this configuration with any kind of controllable apparatus 114, the user connects STB 104 to server 108 on the Internet 106 in response to the user activating a dedicated hard button 118 (or softkey 118 if remote 202 has an LCD touch screen functionality such as the PRONTO (TM)) on remote 202. The user then specifies to server 108 what apparatus 114 he/she would like control via remote 202, as in the example mentioned in the description of Fig.1. Server 108 then downloads to STB 104 data representative of a control code for control of apparatus 114, die control being established via STB 202 in operational use. The data gets programmed into a look-up table 204 that associates an input received from remote 202 with an output as programmed. The output is now the data for the control command required for control of apparatus 114 via STB 104.

Within the above description, the Internet is used as an example of a data network. It is clear that a data network other than the Internet can be used as well.

Reference is made to the following patent documents:
- WO0154406 (attorney docket US 000114) filed for Erik Ekkel et al., for PERSONALIZING CE EQUIPMENT CONFIGURATION AT SERVER VIA WEB-ENABLED DEVICE. This document relates to facilitating the configuring of CE equipment by the end user by means of delegating the configuring to an application sever on the Internet. The consumer enters his/her preferences in a specific interactive Web page through a suitable user-interface of an Internet-enabled device, such as a PC or set-top box or-digital cellphone. The application server generates the control data based on the preferences entered and downloads the control data to the CE equipment itself or to the Internet-enabled device;
- WO0167743 (attorney docket US 000052) filed for Geert Bruynsteen for BUSINESS MODEL FOR LEASING STORAGE SPACE ON A DIGITAL RECORDER. This document relates to adjusting via a data network the available amount of storage space of a fixed HDD (Hard Disk Drive) on a CE appliance. The consumer can upgrade the appliance via a third party service that remotely controls the HDD's settings.
- WO0060858 (attorney docket PHA 23,633) filed for Eugene Shteyn for TIME- AND LOCATION-DRIVEN PERSONALIZED TV. This document relates to a server system that enables a subscriber to select a specific broadcast program for recording and a specific location and time frame for play-out of the recorded program.
- WO0104806 (attorney docket PHA 23,681) filed for Kristin Ondeck for AFTER-SALES CUSTOMIZATION SPECIFIED BY RETAILER ACTS AS INCENTIVE. This document relates to a machine-implemented method of doing business that enables to stimulate commercial activities. According to the method a customer is enabled to notify a specific party, e.g., a manufacturer, importer, or distributor, or a specialized service provider, of a specific commercial activity wherein he or she is or was involved. Upon being notified, the partly enables customizing, via:a data-network such as the Internet, the equipment of the customer as associated with the commercial activity. For example, the specific activity relates to sales of merchandise via a retailer, and the customer notifies the specific party of the purchase of the merchandise from the retailer. When the party has been notified, it enables customizing Internet-enabled of upgradeable electronic equipment of the customer, via the Internet, as associated with the specific retailer from whom the merchandise was purchased. For example, the merchandise is related to the Internet (software application or hardware device) and the customer has purchased it to make it part of his/her Internet-enabled equipment. The merchandise is enabled to be customized via the Internet, preferably according to specifications from the retailer, and also according to input as to, e.g., the intended usage, supplied by the customer at the time when the specific party was notified.
- WO0039772 (attorney docket PHA 23,607) filed for Jan van Ee for FULLY FUNCTIONAL REMOTE CONTROL EDITOR AND EMULATOR. This document relates to a universal programmable remote control device with programmability functions that enable the end-user to customize the device through editing or programming the device's control functionalities. The programming can be achieved via a PC. The control configuration created via an editor on the PC can be downloaded into the device. The PC has emulator software to test the configuration before downloading. The emulator softwate and the remote's control software are made identical as a conbsequence of a software layer that abstracts from the remote's hardware. The emulator for the end-user is thus obtained as an almost free byproduct of the software development phase at the manufacturer.
- U.S. patent 5,819,294 (attorney docket PHA 23,261) issued to Paul Chambers for AUTOMATIC CONFIGURATION MECHANISM FOR UNIVERSAL REMOTE. This patent relates to a programmable remote controller that is programmed via, e.g,, a PC. In this example, the PC has an onboard database for sets of codes used by a variety of commercially available remote controllers. The database contains sets of compressed codes. In order to program the remote, the user lets the PC find a match between a single pulse-code transmitted by a specific known controller on the one hand and an item in the database on the other hand. Upon finding the match, the set containing the matching item is stored in the programmable controller as corresponding to the particular apparatus that is controllable via the specific remote.
   Note that the search algorithm of U.S. patent 5,819,294, mentioned above, can also be used with the current invention. For example, a remote of an apparatus sends a command to the STB while connected to the service web site. The code gets converted into data and unloaded to the Smart Connect (SM) server where it gets compared, in a suitable format, with data representing commands in a data base of commands at the server in the manner specified by the Chambers=patent.
- WO0038039 (PHA 23,409) filed for Yevgenity Shteyn and Jan van Ee for GLUSTERING OF TASK-ASSOCIATED OBJECTS FOR EFFECTING TASKS AMONG A SYSTEM AND ITS ENVIRONMENTAL DEVICES. This document relates to a graphical user-interface (GUI) wherein semantically similar actions are clustered under a single user-input. This document discusses tasking systems and methods that support user interfaces for displaying objects. The displayed objects enable user access to resources that provide for effecting tasks among the system and devices of the systems=environment. More particularly, tasking systems and methods are provided that support the foregoing features, wherein the systems and methods support clustering operations respecting such task-associated objects so as to enhance the effecting of the associated tasks, such clustering operations responding to context. The clustering operations preferably are both adaptive and dynamic. Tasking systems and methods preferably support the tracking of selected states, including, as examples, one ormore of environment states, device states, and system states. Tracked states typically also include states respecting other relevant criteria, such as temporal criteria.
- WO0017738 (attorney docket PHA 23, 501), filed for Joost Kemink for MTERNET-BASED SERVICE FOR UPDATING A PROGRAMMABLE, CONTROL DEVICE. This document relates to an Internet based service for updating a programmable control device. An Internet site contains links to appliance-dependent control and feature option information which can be downloaded to the programmable control as a graphic user interface (GUI). A user interface is provided at he site for the user to easily specify a target appliance, and thereafter selectively download the interface and control information that is available for the target appliance: The Internet site also contains links to other providers of configurations and macros, such as system integrators who provide interfaces based on an inventory of the user's controllable equipment_{,} hobby ist who share configurations and macros that they have found useful.

## Claims

1. A system (200) comprising a remote control device (202), and a first appliance (104) with an Internet connection, wherein:
- the remote control device is configured for remote control of the first appliance;
- the first appliance has first means (122) for programming the remote control device for control of a further appliance (114);
- the remote control device has a button (118) for initiating connecting the first appliance to a specific server (108) on the Internet (106) for downloading onto the first appliance a further control code for control of the further appliance.

2. The system of claim 1, wherein:
- the button is a dedicated button for issuing a specific control code to the first appliance;
- the first appliance is configured for initiating connecting to the specific server upon receipt of the specific control code.

3. The system as in any one of the preceding claims comprising the server, wherein
- the remote control device is configured for enabling a user of the first appliance to specify information about the further appliance, and
- the server is configured for
- receiving from the first appliance the information about the further appliance;
- querying a database (120) of control codes on the basis of the information received; and
- downloading to the first appliance the further control code after finding the further control code in the database on the basis of the information received.

4. The system as in any one of the preceding claims wherein the server is configured to present a web site on a display monitor connected to the first appliance, and to enable a user of the first appliance to specify the information by means of interacting with the web site.

5. The system as in any one of the preceding claims wherein the remote control device has a touch screen, user interface (UI) data accompanying the control code, the UI data comprises the specific location of soft keys of the remote control and associates a specific code with a soft key.

6. The system as in any one of the preceding claims, wherein the first appliance or the server is configured to enable the consumer to manipulate data prior to the data being programmed into the remote control device for causing a single action at the remote control device to execute multiple activities of further appliances.

7. The system as in any one of the preceding claims, wherein the first appliance is configured for programming the remote control device with the further control code via at least one of:
- an infrared transmitter at the first appliance;
- a radio frequency transmitter at the first appliance; and
- a serial cable for connecting the first appliance to a serial port of the remote control device.

8. The system as claim 1, wherein the button is a soft key or a hard button.

9. A first appliance (104) with an Internet connection and controllable via a remote control device (202), wherein:
- the first appliance is configured to connect to a specific server (108) on the Internet (106) upon receiving a specific control code from the remote control device for getting downloaded onto the first appliance a further control code for programming the remote control device to control a further appliance (114); and
- the first appliance is configured for programming the remote control device with the further control code via at least one of:
- an infrared transmitter at the first appliance;
- a radio frequency transmitter at the first appliance; and
- a serial cable for connecting the first appliance to a serial port of the remote control device.

10. A method of enabling to program a remote control device (202) for remote control of a further appliance (114), wherein the method comprises:
- providing the remote control device that is configured for remote control of a first appliance (104) having an Internet connection, and that has a dedicated button (118) for issuing a specific control code to the first appliance for enabling the first appliance to connect to a specific server (108) on the Internet (106) upon receipt of the specific control code; and
- downloading from the specific server onto the first appliance a further control code for programming the remote control device via the first appliance to control the further appliance.

11. The method of claim 10, comprising:
- receiving from the first appliance information about the further appliance;
- querying a database (120) of control codes on the basis of the information received; and
- downloading to the first appliance the further control code after finding the further control code in the database on the basis of the information received.

12. The method of claim 11, comprising providing a web site via the first appliance for enabling a user of the first appliance to specify the information by means of interacting with the web site.

## Patentansprüche

1. System (200) umfassend eine Fernbedienungsvorrichtung (202) und ein erstes Gerät (104) mit einer Internetverbindung, wobei:
- die Fernbedienungsvorrichtung konfiguriert ist, um das erste Gerät fernzusteuern;
- das erste Gerät erste Mittel (122) zum Programmieren der Fernbedienungsvorrichtung, aufweist um ein weiteres Gerät (114) zu steuern;
- die Fernbedienungsvorrichtung einen Knopf (118), zum Beginnen der Verbindung des ersten Geräts mit einem bestimmten Server (108) im Internet (106) aufweist, um einen weiteren Steuercode auf das erste Gerät herunterzuladen, um das weitere Gerät zu steuern.

2. System nach Anspruch 1, wobei:
- der Knopf ein zugehöriger Knopf ist, um einen bestimmten Steuercode an das erste Gerät auszugeben;
- das erste Gerät zum Beginnen der Verbindung mit dem bestimmten Server nach Eingang des bestimmten Steuercodes konfiguriert ist.

3. System wie in einem der vorangegangenen Ansprüche, welche den Server umfassen, wobei
- die Fernbedienungsvorrichtung konfiguriert ist, um es einem Nutzer des ersten Gerätes zu ermöglichen, Informationen über das weitere Gerät zu bestimmen und
- der Server konfiguriert ist, um
- von dem ersten Gerät die Informationen über das weitere Gerät zu empfangen;
- eine Datenbank (120) von Steuercodes auf der Grundlage der empfangenen Informationen abzufragen; und
- den weiteren Steuercode auf das erste Gerät herunterzuladen, nachdem der weitere Steuercode in der Datenbank auf der Grundlage der empfangenen Informationen gefunden wurde.

4. System wie in einem der vorangegangenen Ansprüche, wobei der Server konfiguriert ist, um eine Webseite auf einem Anzeigemonitor anzuzeigen, welcher mit dem ersten Gerät verbunden ist und um es einem Nutzer des ersten Geräts zu ermöglichen, die Informationen mittels Interagieren mit der Webseite zu bestimmen.

5. System wie in einem der vorangegangenen Ansprüche, wobei die Fernbedienungsvorrichtung einen Touchscreen, Daten einer Benutzeroberfläche (UI), welche dem Steuercode zugehörig sind, aufweist, wobei die Daten des UI die bestimmte Position von Softkeys der Fernbedienungsvorrichtung umfassen und einen bestimmten Code mit einem Softkey assoziierten.

6. System wie in einem der vorangegangenen Ansprüche, wobei das erste Gerät oder der Server konfiguriert ist, um es dem Verbraucher zu ermöglichen, Daten zu beeinflussen, bevor die Daten in die Fernbedienungsvorrichtung programmiert werden, um eine einzelne Aktion an der Fernbedienungsvorrichtung hervorzurufen, um mehrere Aktionen von weiteren Geräten auszuführen.

7. System wie in einem der vorangegangenen Ansprüche, wobei das erste Gerät konfiguriert ist, um die Fernbedienungsvorrichtung mit dem weiteren Steuercode über zumindest einen ausgewählt aus:
- einem Infrarot-Sender an dem ersten Gerät;
- einem Funkfrequenzsender an dem ersten Gerät; und
- einem Serienkabel, um das erste Gerät mit einem Serienanschluss der Fernbedienungsvorrichtung zu verbinden
zu programmieren.

8. System wie in Anspruch 1, wobei der Knopf eine Softkey oder ein Hardbutton ist.

9. Ein erstes Gerät (104) mit einer Internetverbindung und steuerbar über eine Fernbedienungsvorrichtung (202), wobei
- das erste Gerät konfiguriert ist, um mit einem bestimmten Server (108) im Internet zu verbinden, nachdem ein bestimmter Steuercode von der Fernbedienungsvorrichtung empfangen wurde, um einen weiteren Steuercode zum Programmieren der Fernbedienungsvorrichtung auf das erste Gerät herunterzuladen, um ein weiteres Gerät (114) zu steuern; und
- das erste Gerät konfiguriert ist, um die Fernbedienungsvorrichtung mit dem weiteren Steuercode über zumindest einen ausgewählt aus:
- einem Infrarot-Sender an dem ersten Gerät;
- einem Funkfrequenzsender an dem ersten Gerät; und
- einem Serienkabel, um das erste Gerät mit einem Serienanschluss der Fernbedienungsvorrichtung zu verbinden
zu programmieren.

10. Verfahren zum Ermöglichen einer Programmierung einer Fernbedienungsvorrichtung (202) zum Fernbedienen eines weiteren Geräts (114), wobei das Verfahren umfasst:
- Bereitstellen der Fernbedienungsvorrichtung, welche zum Fernbedienen eines ersten Gerätes (104), welches eine Internetverbindung aufweist, konfiguriert ist und welche einen zugehörigen Knopf (118) zum Ausgeben eines bestimmten Steuercodes an das erste Gerät aufweist, um zu ermöglichen, dass sich das erste Gerät mit einem bestimmten Server (108) im Internet (106) nach Erhalt des bestimmten Steuercodes verbindet; und
- Herunterladen eines weiteren Steuercodes von dem bestimmten Server auf das erste Gerät zum Programmieren der Fernbedienungsvorrichtung über das erste Gerät, um das weitere Gerät zu steuern.

11. Verfahren nach Anspruch 10, umfassend:
- Empfangen von Informationen über das weitere Gerät von dem ersten Gerät;
- Abfragen einer Datenbank (120) von Steuercodes auf der Grundlage der empfangenen Informationen; und
- Herunterladen des weiteren Steuercodes auf das erste Gerät nach Finden des weiteren Steuercodes in der Datenbank auf der Grundlage der empfangenen Informationen.

12. Verfahren nach Anspruch 11, umfassend das Bereitstellen einer Webseite über das erste Gerät, um es einem Benutzer des ersten Geräts zu ermöglichen, die Informationen mittels Interagieren mit der Webseite zu bestimmen.

## Revendications

1. Système (200) comprenant un dispositif de commande à distance (202), et un premier appareil (104) avec une connexion internet, dans lequel :
- le dispositif de commande à distance est configuré pour commander à distance le premier appareil ;
- le premier appareil comporte des premiers moyens (122) pour programmer le dispositif de commande à distance pour commander un appareil supplémentaire (114) ;
- le dispositif de commande à distance a un bouton (118) pour initier la connexion du premier appareil à un serveur spécifique (108) sur l'Internet (106) pour télécharger sur le premier appareil un autre code de commande pour commander l'appareil supplémentaire.

2. Système selon la revendication 1, dans lequel :
- le bouton est un bouton dédié pour émettre un code de commande spécifique au premier appareil ;
- le premier appareil est configuré pour initier la connexion au serveur spécifique à réception du code de commande spécifique.

3. Système selon l'une quelconque des revendications précédentes comprenant le serveur, dans lequel :
- le dispositif de commande à distance est configuré pour permettre à un utilisateur du premier appareil de spécifier des informations sur l'appareil supplémentaire ; et
- le serveur est configuré pour :
- recevoir du premier appareil les informations relatives à l'appareil supplémentaire ;
- interroger une base de données (120) de codes de commande sur la base des informations reçues ; et
- télécharger sur le premier appareil le code de commande supplémentaire après avoir trouvé le code de commande supplémentaire dans la base de données sur la base des informations reçues.

4. Système selon l'une quelconque des revendications précédentes dans lequel le serveur est configuré pour présenter un site internet sur un écran d'affichage connecté au premier appareil, et pour permettre à l'utilisateur du premier appareil de spécifier les informations au moyen d'une interaction avec le site internet.

5. Système selon l'une quelconque des revendications précédentes dans lequel le dispositif de commande à distance a un écran tactile, une donnée d'interface utilisateur (IU) accompagnant le code de commande, la donnée d'interface utilisateur comprennent l'emplacement explicite de touches de fonction du dispositif de commande à distance et associe un code spécifique à une touche de fonction.

6. Système selon l'une quelconque des revendications précédentes, dans lequel le premier appareil ou le serveur est configuré pour permettre au consommateur de manipuler des données avant que les données soient programmées dans le dispositif de commande à distance de manière à ce qu'une seule action sur le dispositif de commande à distance exécute de multiples activités sur des appareils supplémentaires.

7. Système selon l'une quelconque des revendications précédentes, dans lequel le premier appareil est configuré pour programmer le dispositif de commande à distance avec le code de commande supplémentaire via au moins l'un des éléments suivant :
- un transmetteur infrarouge sur le premier appareil ;
- un émetteur radio fréquence sur le premier appareil ; et
- un câble série pour connecter le premier appareil à un port série du dispositif de commande à distance.

8. Système selon la revendication 1, dans lequel le bouton est une touche de fonction ou un bouton dur.

9. Premier appareil (104) avec une connexion internet et qui se commande via un dispositif de commande à distance (202), dans lequel :
- le premier appareil est configuré pour se connecter à un serveur spécifique (108) de l'Internet (106) à réception d'un code de commande spécifique provenant du dispositif de commande à distance pour télécharger sur le premier appareil un code de commande supplémentaire pour programmer le dispositif de commande à distance pour commander un appareil supplémentaire (114) ; et
- le premier appareil est configuré pour programmer le dispositif de commande à distance avec le code de commande supplémentaire via au moins l'un des éléments suivant :
- un transmetteur infrarouge sur le premier appareil ;
- un émetteur radio fréquence sur le premier appareil ; et
- un câble série pour connecter le premier appareil à un port série du dispositif de commande à distance.

10. Procédé pour permettre de programmer un dispositif de commande à distance (202) pour commander à distance un appareil supplémentaire (114), selon lequel ce procédé comprend :
- la fourniture d'un dispositif de commande à distance qui est configuré pour la commande à distance un premier appareil (104) ayant une connexion internet, et qui a un bouton dédié (118) pour transmettre un code de commande spécifique au premier appareil pour permettre au premier appareil de se connecter à un serveur spécifique (108) sur l'Internet (106) à réception du code de commande spécifique ; et
- le téléchargement depuis le serveur spécifique sur le premier appareil d'un code de commande supplémentaire pour programmer le dispositif de commande à distance via le premier appareil pour commander l'appareil supplémentaire.

11. Procédé selon la revendication 10, comprenant :
- la réception en provenance du premier appareil d'informations relatives à l'appareil supplémentaire ;
- l'interrogation d'une base de données (120) de codes de commande sur la base des informations reçues ; et
- le téléchargement sur le premier appareil du code de commande supplémentaire après avoir trouvé le code de commande supplémentaire dans la base de données sur la base des informations reçues.

12. Procédé selon la revendication 11, comprenant la fourniture d'un site internet via le premier appareil pour permettre à un utilisateur du premier appareil de spécifier les informations au moyen d'une interaction avec le site internet.
